# FASCICULE DE BREVET EUROPEEN

(11) **EP 2 887 360 B1**
(45) Date de publication et mention de la délivrance du brevet: **10.01.2018**
(21) Numéro de dépôt: 14197745.4
(22) Date de dépôt: 12.12.2014
(51) Int. Cl.: G21K 1/10

(54) **Procédé de mesure de la résolution spatiale d' un système d'imagerie à rayons X**
Messung der Auflösung eines Röntgenstrahlabbildungssystems
Method for measuring the spatial resolution of an X-ray imaging system

(30) Priorité: 13.12.2013 FR 1362587
(43) Date de publication de la demande: 24.06.2015
(73) Titulaire: COMMISSARIAT À L'ÉNERGIE ATOMIQUE ET AUX ÉNERGIES ALTERNATIVES, 75015 Paris (FR)
(72) Inventeur: Bleuet, Pierre, 38180 SEYSSINS (FR); Constancias, Christophe, 38700 SARCENAS (FR)
(74) Mandataire: Priori, Enrico

(56) Documents cités:
- WO-A1-2004/012209
- US-A- 5 812 629
- US-A1- 2007 183 579
- US-A1- 2012 140 883
- ALEXANDER SASOV ET AL.: "New type of x-ray source for lensless laboratory nano-CT with 50nm resolution", SPIE, PO BOX 10 BELLINGHAM WA 98227-0010, USA, 2010, pages 78040Q-1-78040Q-8, XP040543563,

## Description

L'invention concerne l'analyse de la résolution de systèmes de tomographie par rayons X avec mires de résolution. Une mire de résolution est une plaque porteuse de motifs serrés de matériau absorbant pour les rayons X ; cette plaque est exposée aux rayons X dans un système d'imagerie et produit une image numérique ou photographique des motifs de matériau absorbant. Le contraste de l'image est observé sur les différents motifs pour aboutir à une valeur de résolution du système d'imagerie. La connaissance de cette résolution est une donnée importante pour l'utilisation ultérieure du système.

Un exemple de l'état de la technique est fourni par la publication: ALEXANDER SASOV ET AL. "New type of x-ray source for lensless laboratory nano-CT with 50nm resolution", SPIE, PO BOX 10 BELLINGHAM WA 98227-0010, USA, 2010, pages 78040Q-1-78040Q-8. L'invention porte sur un procédé de mesure de la résolution spatiale d'un système d'imagerie à rayons X selon la revendication 1.

Les systèmes d'imagerie à rayons X peuvent être destinés à l'observation de structures de très petites dimensions, de l'ordre de quelques dizaines de nanomètres de large, pouvant être enterrées à plusieurs dizaines de micromètres de profondeur dans une structure à analyser. Actuellement, on dispose de systèmes de tomographie à rayons X dont la résolution peut descendre jusqu'à 50 nanomètres. Pour mesurer cette résolution, on doit donc utiliser des mires de résolution à motifs extrêmement petits, pouvant descendre à des largeurs et des espacements de quelques dizaines de nanomètres.

Les mires de résolution envisagées ici sont constituées par des réseaux de lignes parallèles (droites ou courbes) ou radiales d'un matériau absorbant pour les rayons X, tel que de l'or, du platine, du hafnium, ou des matériaux un peu moins absorbants mais plus faciles à graver comme du tungstène ou du tantale ou des compositions à base de ces matériaux, comme du nitrure de tantale. Le matériau absorbant est déposé sur un substrat transparent aux rayons X, par exemple sur une membrane mince de silicium, ou encore enterré dans l'épaisseur de ce substrat. Pour des mires de haute résolution, la réalisation du motif est obtenue par une technique de lithographie par faisceau d'électrons puis de gravure plasma. L'espacement des lignes et leur largeur varient selon la position des motifs dans la mire et les espacements et largeurs sont connus pour chaque position. On lit directement la résolution en observant sur l'image photographique ou numérique de la mire, illuminée par des rayons X, les positions dans lesquelles le contraste entre lignes absorbantes est suffisant et les positions dans lesquelles il devient insuffisant pour bien distinguer deux lignes voisines.

Etant donné que les rayons X sont très pénétrants, les motifs de la mire doivent être suffisamment absorbants, c'est-à-dire qu'ils doivent non seulement être constitués d'un matériau intrinsèquement absorbant mais aussi avoir une épaisseur importante. De plus, le matériau utilisé doit être relativement facile à graver, y compris sur une hauteur importante, et on ne peut donc pas toujours choisir les matériaux intrinsèquement les plus absorbants (or ou platine par exemple). Pour des matériaux plus faciles à graver, tels que le tungstène, mais moins absorbants, on peut avoir besoin de réaliser des motifs d'épaisseur plusieurs fois plus grande que la largeur ou l'espacement des motifs.

Lorsque l'illumination de la mire est faite par un faisceau parallèle de rayons X, la mesure fonctionne bien. C'est le cas lorsque les rayons X sont obtenus par rayonnement synchrotron. Mais dans le cas général, les sources de rayons X fournissent un faisceau divergent. Si l'épaisseur du matériau n'est pas faible par rapport à la largeur des motifs, on aboutit à un phénomène d'absorption non uniforme et d'ombrage pour les rayons X qui ont une incidence oblique : d'une part l'absorption n'est pas uniforme dans toute la largeur d'une zone absorbante et d'autre part une absorption est constatée entre deux zones absorbantes là où il ne devrait pas y en avoir. Le contraste en est fortement diminué et détériore la mesure de résolution.

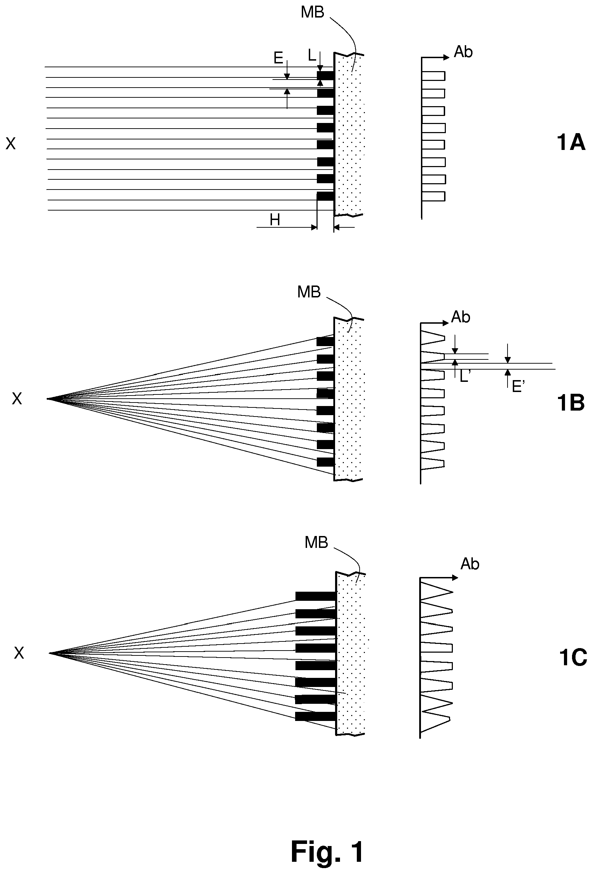

Ceci est illustré sur la figure 1 qui est une coupe transversale de la mire, dans un plan qui contient l'axe du faisceau X et qui est perpendiculaire à plusieurs lignes parallèles de zones absorbantes. Le matériau absorbant, de hauteur H, est déposé à la surface d'une membrane MB ; il pourrait aussi être enterré dans cette membrane. La coupe d'une ligne absorbante est figurée par une marque noire. Les lignes ont ici une largeur L constante et un espacement E constant et qui peut être égal à L. La hauteur H est supérieure à la largeur L et à l'espacement E. La hauteur ou profondeur H du matériau absorbant est mesurée perpendiculairement à la surface plane de la membrane. La largeur L et l'espacement E des lignes sont mesurés perpendiculairement aux lignes parallèles.

Pour des rayons X incidents perpendiculairement à la mire, c'est-à-dire parallèlement à la direction de la hauteur des motifs absorbants, il n'y a pas de problème d'ombrage (figure 1A) ; c'est le cas lorsque les rayons X sont fournis par une source non divergente telle qu'un synchrotron, comme par exemple dans le cas de WO 2004/012209 A1. Le motif spatial d'absorption Ab qui résulte de cette illumination non divergente est dessiné à côté du motif de zones absorbantes. Ce motif d'absorption, recueilli sur une plaque photographique ou sur un capteur d'image radiologique numérique, est binaire et reproduit exactement le motif de zones absorbantes ; il comprend des plages d'absorption maximale constante là où une zone absorbante est présente, alternées avec des plages d'absorption minimale , là où il n'y en a pas.

Mais pour des rayons X divergents fournis par une source X commerciale classique (figure 1B), le motif d'absorption Ab devient différent et d'autant plus différent que l'oblicité des rayons augmente. Ainsi, vers le centre de la mire, le motif d'absorption reste pratiquement binaire avec des plages d'absorption maximale de largeur L et d'espacement E. Mais plus on s'écarte du centre, plus la courbe d'absorption se déforme et cesse d'être binaire : une absorption est présente sur une largeur L' supérieure à L, croissante depuis une valeur minimale jusqu'à une valeur maximale et retour à la valeur minimale, et reste à sa valeur minimale sur une largeur E' inférieure à E. Chaque plage d'absorption comprend donc une plage d'absorption maximale et une absorption progressivement décroissante. Le contraste en est détérioré en proportion de l'oblicité des rayons incidents.

La perte de contraste est d'autant plus grande que la hauteur H est grande et que l'angle d'oblicité est grand. La figure 1C représente cet effet d'ombrage pour une hauteur H plus grande que sur la figure 1B. Sur les figures 1B et 1C, les angles d'oblicité sont exagérés pour faciliter la lecture.

Comme la hauteur H est dictée par la nécessité d'avoir une absorption suffisante des rayons X, on est gêné lorsqu'on veut mesurer une résolution en utilisant des motifs de largeur et espacement plus faibles ou beaucoup plus faibles que cette hauteur, c'est-à-dire des motifs absorbants à rapport de forme H/L ou H/E égal à 2 à 5, voire plus.

Typiquement, avec du tungstène, on peut avoir besoin de motifs absorbants de hauteur 100 nanomètres et de largeur 25 nanomètres. Par ailleurs, on ne peut pas toujours se contenter d'avoir des motifs de haute résolution au centre de la mire, on peut avoir besoin de mesurer la résolution également sur les bords.

On peut alors aboutir à la conclusion que la résolution du système d'imagerie est insuffisante, non pas parce qu'elle l'est véritablement mais parce que la méthode de mesure de la résolution est affectée d'une erreur due à la constitution de la mire.

C'est pourquoi on propose selon l'invention une mire de résolution pour système d'imagerie à rayons X, comprenant un substrat portant des zones absorbantes pour les rayons X, dont les largeurs et les espacements sont choisis pour permettre une mesure de la résolution du système, caractérisée en ce que les zones absorbantes dans les divers points du motif ont une forme dont une direction générale d'élévation par rapport à la surface du substrat est tournée vers un point de convergence (à distance finie) qui est le même pour toutes les zones absorbantes.

Par conséquent, au lieu que les zones absorbantes soient orientées en élévation toutes parallèlement à un même axe, elles sont orientées selon des directions d'élévation obliques convergentes. Le point de convergence est celui où on placera la source de rayons X dans l'utilisation de la mire.

Les zones absorbantes peuvent être des zones ayant chacune une forme généralement conique (cône ou portion de cône) dont le sommet est le point de convergence. Ces zones absorbantes ont de préférence un rapport de forme supérieur à deux (de préférence de deux à cinq), c'est-à-dire que la hauteur (dans la direction du point de convergence, selon une génératrice du cône) est au moins deux fois supérieure et de préférence de deux à cinq fois supérieur à la largeur de la zone. Si les motifs sont des lignes parallèles, la largeur de la zone est la largeur mesurée perpendiculairement à ces lignes. La mire peut comporter un motif de lignes parallèles circulaires concentriques (cercles ou portions de cercles), c'est-à-dire qu'elle comporte une série de plusieurs zones absorbantes coniques d'angles au sommet différents, ayant des directrices de cône qui sont des portions de lignes circulaires concentriques. Ces lignes concentriques sont de préférence espacées radialement les unes des autres d'une même valeur d'espacement qui est de préférence égale à la largeur des zones. Il y a de préférence plusieurs séries de telles zones coniques, et les valeurs d'espacements et largeurs peuvent être différentes d'un groupe à l'autre.

Pour des raisons technologiques de fabrication de la mire, les formes coniques mentionnées ci-dessus sont le plus souvent des formes approximatives, pourvu qu'elles réduisent l'effet d'ombrage mentionné ci-dessus là où l'oblicité des rayons X produirait un tel effet sur une zone d'élévation complètement verticale. Pour donner cette forme approximativement conique réduisant les effets d'ombrage, on prévoit de préférence que chaque zone est constituée à partir de la juxtaposition de sous-zones de hauteurs différentes, formant sur un bord latéral de la zone une sorte d'escalier produisant une pente globale d'élévation oblique.

Dans une réalisation différente, on prévoit que la membrane qui supporte les zones absorbantes est courbée en portion de sphère, avec un centre de courbure situé au point de convergence désiré. Dans ce cas, on a avantage à former la mire selon un procédé classique (zones absorbantes toutes élevées perpendiculairement à la surface d'une membrane (ou enterrées perpendiculairement à cette surface), et à courber ensuite la membrane par contrainte périphérique ou par application d'une pression différentielle entre les faces opposées de la membrane. Dans cette réalisation, les lignes parallèles de zones absorbantes peuvent être des lignes circulaires concentriques ou des lignes droites.

Dans une autre réalisation, compatible avec les réalisations précédentes, la mire peut être constituée par au moins deux mires partielles disposées l'une derrière l'autre dans une direction principale d'illumination ; chaque mire comporte des zones absorbantes, les motifs de zones absorbantes des deux mires étant semblables et disposés selon une homothétie de telle manière que deux zones absorbantes qui se correspondent dans les deux mires soient alignées selon une direction caractéristique, toutes les directions caractéristiques d'alignement convergeant vers le point de convergence. Dans cette réalisation, c'est la somme des hauteurs des zones absorbantes qui réalise l'absorption, et par conséquent la hauteur des zones de chaque mire peut être inférieure à ce qui est nécessaire lorsqu'il n'y a qu'une seule mire. On considère alors que la direction générale d'élévation des zones absorbantes par rapport à la surface du substrat est la direction qui relie deux zones absorbantes qui se correspondent dans les motifs des deux mires partielles et non pas la direction d'élévation de chacune de ces deux zones par rapport à la surface qui la porte ; en effet, la hauteur de chaque zone étant faible, sa direction propre d'élévation a peu d'importance et peut être perpendiculaire au substrat même s'il est plan.

Dans cette réalisation aussi, les lignes de zones absorbantes peuvent être droites ou circulaires.

Pour la fabrication de la mire, on peut envisager plusieurs méthodes, dépendant notamment du fait que la mire est faite ou non à l'aide de deux ou plusieurs mires partielles.

Si elle est faite avec une seule mire et si le substrat de la mire est plan, les zones absorbantes sont formées par dépôt d'une résine et par lithographie à faisceau d'électrons puis gravure du matériau absorbant avec une division de chaque motif absorbant en sous-zones juxtaposées de largeurs plus faibles que la largeur de la zone, et de hauteurs différentes, donnant une pente oblique à un bord latéral de la zone.

Si la mire est faite d'au moins deux mires partielles superposées à une distance **d** l'une de l'autre, on pourra lithographier chacune des deux mires par un procédé lithographique à faisceau d'électrons, en calculant le motif de la deuxième mire partielle pour qu'il reproduise le motif de la première mire partielle avec une homothétie de rapport (D+d)/D, où D est la distance entre la première mire et le point de convergence où on veut placer la source de rayons X.

Dans un autre procédé, on peut lithographier la première mire partielle par un procédé de lithographie (à faisceau d'électrons ou autre), et se servir de la première mire partielle comme masque de lithographie d'une deuxième mire partielle dans un procédé de lithographie à rayons X ; on placera la source de rayons X à une distance D de la première mire et la deuxième mire derrière la première et à une distance d de la première ; le motif gravé dans la deuxième mire sera homothétique du motif gravé dans la première mire, avec un rapport d'homothétie (D+d)/D.

D'autres caractéristiques et avantages de l'invention apparaîtront à la lecture de la description détaillée qui suit et qui est faite en référence aux dessins annexés dans lesquels :
- la figure 1 déjà décrite représente une mire de résolution éclairée par une source de rayons X non divergente (1A) et par une source de rayons X divergente (1B et 1C) ;
- la figure 2 représente une mire de résolution selon un aspect de l'invention,
   vue en coupe dans un plan contenant l'axe du faisceau de rayons X et perpendiculaire aux lignes parallèles du motif ;
- la figure 3 représente une vue en perspective de la mire de la figure 2 (sans le substrat qui porte les motifs absorbants) ;
- la figure 4 représente une vue en perspective d'un autre exemple de mire avec des secteurs angulaires dans lesquels des zones absorbantes en portions de cônes sont formées, avec des largeurs et espacements de motifs différents d'une zone à l'autre ;
- la figure 5 représente une vue en coupe d'une variante de réalisation de l'invention ;
- la figure 6 représente une vue de face d'une mire de lignes absorbantes parallèles horizontales et verticales ;
- la figure 7 représente une vue en coupe d'une mire formée de deux mires partielles à motifs localisés homothétiquement ;
- la figure 8 représente une vue en coupe d'un autre exemple de mire formée de deux mires partielles à motifs homothétiques ;
- la figure 9 représente une mire formée de deux mires partielles superposées à motifs homothétiques, la deuxième mire étant réalisée par exposition aux rayons X à travers la première mire, avec une source de rayons X divergente ;
- la figure 10 représente une étape d'un procédé de formation de zones absorbantes de forme approchant une forme conique par juxtaposition de bandes étroites de résine de hauteurs différentes ;
- la figure 11 représente les zones absorbantes formées par le transfert, par gravure du matériau absorbant, du résultat de l'étape de la figure 10.

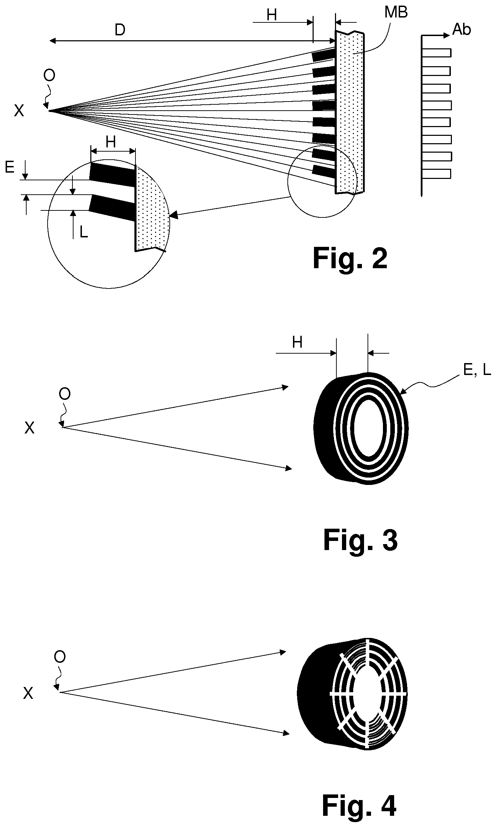

La figure 2 représente une coupe verticale d'une mire selon un aspect de l'invention, éclairée par un faisceau de rayons X divergent à partir d'un point O. L'angle de divergence a été représenté plus large qu'il n'est dans la réalité, pour mieux faire apparaître les particularités de l'invention. Un ordre de grandeur typique d'angle de divergence est de 3 à 5°. Pour une source de rayons X constituée par une anode bombardée par un faisceau d'électrons à haute énergie, le point O est le point d'anode qui reçoit le faisceau d'électrons. Le plus souvent, l'anode est enfermée dans une enceinte ayant une ouverture qui limite l'angle solide d'émission des rayons X. L'angle d'ouverture représenté est plus grand que dans la réalité.

La mire peut être formée par des motifs absorbants déposés sur la surface plane d'un substrat ou enterrés dans ce substrat. Le substrat est de préférence une membrane fine MB transparente aux rayons X, de préférence une membrane de silicium d'une centaine de nanomètres d'épaisseur. Les motifs absorbants ont chacun une forme de portion de cône, et, pour une zone absorbante déterminée, l'angle au sommet du cône correspond à l'angle d'illumination par la source de rayons X ; autrement dit, si la mire est formée sur une membrane plane 10, chaque zone absorbante représentée sur la figure 2 par une surface noire est inclinée par rapport au plan de la membrane d'un angle d'autant plus important que la zone est éloignée du centre de la mire, c'est-à-dire de la partie de la mire qui est frappée par l'axe central du faisceau de rayons X lors de l'utilisation de la mire. Les inclinaisons convergent toutes vers la source de rayons X ou en d'autres mots vers un même point de convergence commun O où il faut placer la source de rayons X pour que la mire fonctionne le mieux possible, le plan de la mire étant perpendiculaire à l'axe central du faisceau de rayons X.

La direction d'absorption maximale par la zone absorbante est donc toujours orientée vers le même point de convergence quelle que soit la position de la zone d'absorption dans la mire. Il en résulte que le contraste est pratiquement le même que dans le cas de la figure 1A où le rayonnement X est non divergent et les zones absorbantes sont dressées perpendiculairement au substrat (fig. 1A). La variation d'absorption Ab est représentée à côté de la mire sur la figure 2 ; elle a une allure binaire dans toute la surface illuminée par la source de rayons X placée au point O. Contrairement à ce qu'on voyait sur la figure 1B, il n'y a pas d'absorption partielle sur les bords des zones absorbantes par des rayons qui seraient obliques par rapport à l'inclinaison générale de la zone absorbante. Pour un motif de zones ayant une largeur L et un espacement E constants, la courbe de variation d'absorption présente des plages nettes de largeur L et d'espacement E sans réduction de contraste.

La figure 3 représente une vue en perspective correspondant à la mire de la figure 2, permettant de mieux voir ce qu'on entend par forme en cône ou en portion de cône d'un motif absorbant. La membrane MB n'est pas représentée, seules les zones absorbantes sont représentées. Vues en bout en regardant de la mire vers le point O, ou vues en coupe perpendiculaire à l'axe central de symétrie de l'illumination, les zones absorbantes sont des anneaux concentriques de largeur constante L et d'espacement constant E. Vues en coupe dans un plan contenant l'axe de symétrie de l'illumination (figure 2), ce sont approximativement des rectangles de largeur L et de longueur H. Mais dans l'espace à trois dimensions (figure 3), ces zones sont chacune constituée par une portion, de hauteur H, de surface conique à base circulaire et ayant une certaine épaisseur L ; chaque zone absorbante à base circulaire correspond à un cône d'angle au sommet différent, tous les cônes ayant le même sommet O.

Dans un exemple de réalisation, la mire est construite avec les paramètres géométriques suivants :
- angle de conicité total : 7° (-3,5° à +3,5°)
- hauteur H des motifs absorbants : 200 nm
- pas de répartition (E+L) des lignes circulaires concentriques de la base des cônes : 50 nm.

La mire peut comporter plusieurs séries de lignes concentriques avec un pas d'espacement différent dans les différentes séries, les motifs les plus resserrés étant au centre et les motifs plus larges à la périphérie.

Sur la figure 4, on a représenté une variante de réalisation dans laquelle les zones absorbantes sont des portions de cône dont les bases sont des portions de cercles concentriques et non des cercles complets comme à la figure 3. Les largeurs et espacements des anneaux concentriques peuvent être différents d'une portion d'arc de cercle à une autre, comme cela est représenté.

Mais la mesure de résolution peut aussi se faire en utilisant plusieurs mires différentes telles que celle de la figure 2, mires dont les pas de répartition des lignes concentriques sont différents les uns des autres.

Lors de l'utilisation de la mire, on comprend qu'elle doit être centrée par rapport au faisceau de rayons X, et disposée perpendiculairement à l'axe central du faisceau ; elle doit être placée à une distance D telle que le point d'émission du faisceau de rayons X soit situé au sommet O des cônes qui convergent tous vers ce point. La mire est placée à la distance D connue, ou bien son emplacement désiré est déterminé par expérimentation ; dans le deuxième cas, on placera la mire en diverses positions et orientations jusqu'à trouver la position et l'orientation qui fournit le meilleur contraste sur l'ensemble de la mire.

Dans ce qui précède, on a considéré que les motifs de zones absorbantes sont définis par des lignes circulaires concentriques ; si on considère qu'une zone absorbante définie par une ligne circulaire ou une portion de ligne circulaire est constituée d'une multitude de zones élémentaires, on peut dire que la direction générale de l'élévation des zones absorbantes élémentaires appartenant à une ligne donnée est orientée obliquement avec toujours la même valeur d'angle par rapport à la surface de support de la mire sur laquelle les zones sont dressées, ceci quelle que soit la position de la zone élémentaire le long de la ligne circulaire. On pourrait éventuellement envisager que les motifs de zones absorbantes ne soient pas des motifs concentriques mais soient des lignes droites parallèles ou des lignes disposées radialement en éventail ; cependant ces solutions ne sont pas préférées car la direction oblique à donner à l'élévation des zones absorbantes élémentaires d'une ligne ne serait plus constante le long d'une même ligne, ce qui peut compliquer significativement la réalisation.

On reviendra plus loin sur la manière de réaliser des zones absorbantes en forme de cônes ou portions de cônes, étant entendu qu'il s'agit d'approximations de cônes compte-tenu des contraintes technologiques.

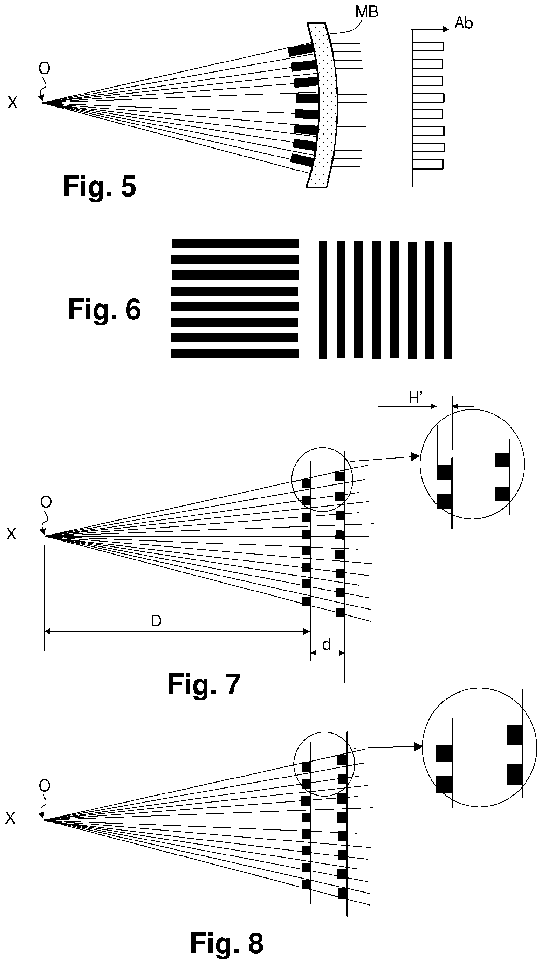

Dans une autre réalisation, représentée à la figure 5, on prévoit que la surface de la membrane MB est une portion de sphère dont le centre de courbure est le point O où on souhaite placer la source de rayons X. Les zones absorbantes sont alors des motifs élevés perpendiculairement à la surface en tout point, et leur direction d'élévation est donc différente selon l'endroit où se situe la zone absorbante. Toutes les directions d'élévation convergent vers un même point de convergence O qui est le centre de courbure de la portion de sphère. Pour réaliser une telle mire, on gravera des zones absorbantes selon des procédés classiques sur une membrane plane, les zones absorbantes ayant alors toutes une élévation perpendiculaire au plan de la membrane, et on courbera ensuite la membrane, soit par contrainte exercée uniformément tout autour de sa périphérie, soit par application d'une pression différentielle entre les faces opposées de la membrane. Ceci est possible pour des membranes minces, par exemple des membranes de silicium. Les zones absorbantes ont alors des élévations qui restent perpendiculaires en tous points à la membrane et qui convergent donc vers le centre de courbure de celle-ci.

Avec une mire constituée de cette manière, on peut très bien utiliser comme motif de mire des lignes droites parallèles telles que celles de la figure 6 plutôt que des lignes circulaires concentriques comme à la figure 3. La direction générale d'élévation en un point quelconque de la ligne ne sera pas constante pour tous les points de la ligne, mais elle sera inclinée naturellement par rapport à l'axe du faisceau de rayons X d'autant plus que ce point est écarté du centre de la mire (centre défini par le point d'impact d'un rayon central du faisceau de rayons X lorsque la mire est bien placée).

La figure 7 représente une autre constitution de mire de résolution selon un aspect de l'invention, visant à faciliter la réalisation en évitant d'avoir un rapport de forme H/L trop grand pour les zones absorbantes. Au lieu d'avoir une mire comportant des zones absorbantes de hauteur H suffisante pour absorber fortement les rayons X, la mire est maintenant constituée de deux mires partielles parallèles (ou plus) écartées d'une distance d comportant chacune des zones absorbantes de hauteur H' plus faible que H. La somme des hauteurs H' (identiques ou non dans les différentes mires) correspond à la hauteur désirée pour avoir une absorption suffisante. Les motifs de zones absorbantes sont semblables dans les deux mires : une zone absorbante élémentaire de chaque mire partielle est mise en correspondance avec une zone élémentaire respective de l'autre mire ou des autres mires. Cette correspondance est faite avec une homothétie de positionnement, définie par rapport au sommet O du cône d'illumination, c'est-à-dire par rapport à l'endroit où on souhaite placer une source de rayons X. Cela veut dire que la position d'une zone absorbante élémentaire d'une mire partielle et la position de la zone absorbante élémentaire correspondante de l'autre mire sont situées sur une droite et que toutes les droites qui relient ainsi des zones absorbantes élémentaires qui se correspondent convergent en un même point.

Cette structure à deux ou plusieurs mires partielles permet de limiter la hauteur des zones absorbantes individuelles, tout en additionnant leurs absorptions. Dans ce cas, il n'est pas nécessaire de se préoccuper de la direction d'élévation de chaque zone par rapport à la surface de la membrane car la hauteur H' peut être suffisamment faible pour ne pas provoquer de phénomènes d'ombrage ; la direction d'élévation qu'il faut considérer maintenant et qui doit être oblique est alors la direction reliant deux zones élémentaires qui se correspondent dans les deux mires partielles.

Sur la figure 7, on a représenté cette homothétie de positionnement, avec des zones absorbantes de même largeur dans les deux mires. Sur la figure 8, on considère de plus qu'il y a une homothétie de dimensions des largeurs et espacements des zones absorbantes, ce qui améliore encore le contraste.

Les configurations des figures 7 et 8 permettent d'utiliser des motifs de zones absorbantes qui ne sont pas concentriques comme aux figures 3 et 4 et qui peuvent être notamment des motifs de lignes parallèles tels que ceux représentés sur la figure 6. Les motifs d'une des mires partielles se déduisent en effet par calcul des motifs de la première ligne quel que soit la forme du motif sans qu'il y ait à calculer une direction générale d'élévation d'un point d'une zone absorbante en fonction de la position de ce point par rapport au centre de la mire.

Il est même possible de réaliser directement le motif d'une deuxième mire à partir du motif d'une première mire, sans calcul si on réalise les mires par un procédé qui fait intervenir lui-même de manière naturelle une homothétie intrinsèque de motifs.

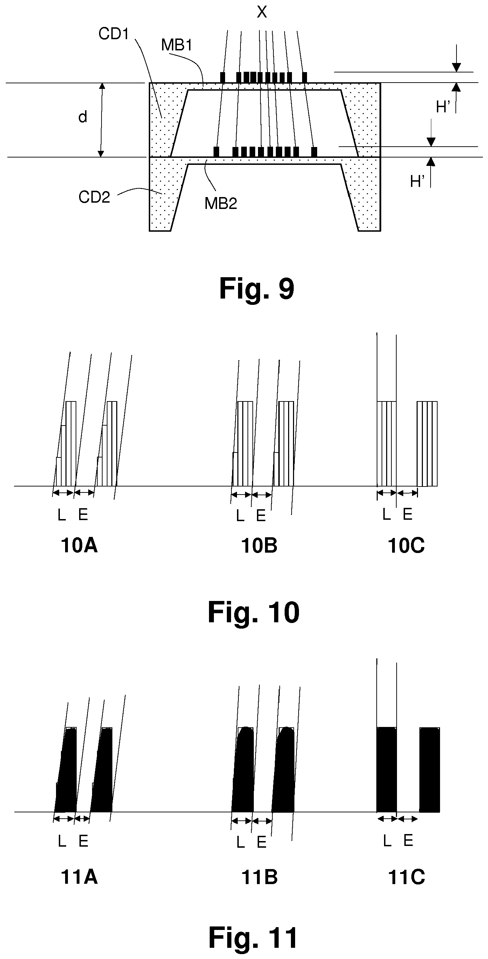

La figure 9 représente une mire de résolution formée de la superposition de deux mires partielles. On pourrait avoir trois mires partielles ou plus superposées. Les zones absorbantes des mires partielles sont formées par exemple sur des membranes respectives de silicium MB1 et MB2 tendues sur des cadres de silicium CD1 et CD2. L'espacement **d** entre les deux mires est égal à l'épaisseur des cadres de silicium, par exemple une épaisseur standard de 750 micromètres. L'épaisseur de la membrane peut être de 100 ou 200 nanomètres. La hauteur H' des motifs peut-être de l'ordre de 50 nanomètres. Les mires peuvent avoir une surface de 1mm². Les dessins ne sont pas à l'échelle pour faciliter la compréhension.

Pour réaliser cette mire, on peut fabriquer chaque mire par un procédé de lithographie à faisceaux d'électrons, particulièrement adapté pour des largeurs de traits et/ou espacements pouvant descendre à 20 nanomètres voire même 10 nanomètres, après avoir calculé par homothétie les formes et positions des motifs absorbants de la deuxième mire à partir des formes et positions des motifs de la première mire. La première mire est la mire inférieure et elle est réalisée dans une première opération de lithographie à faisceau d'électrons puis gravure du matériau absorbant ; la deuxième mire est alors mise en place au-dessus de la première et elle est lithographiée avec son motif propre, homothétique du premier avec un rapport d'homothétie D/(D+d) où d est la distance entre mires et D la distance de la deuxième mire au point de convergence O désiré ; la deuxième mire est lithographiée comme la première par lithographie à faisceau d'électrons, en respectant un alignement des deux motifs, ce qui est facilement réalisable avec des marques gravées sur la première mire étant donné que la membrane est transparente et laisse voir le motif de la première mire.

La lithographie des mires partielles par faisceau d'électrons peut se faire par des procédés classiques de transfert de motifs gravés dans une résine sensible au faisceau d'électrons. Le transfert de motif de résine peut se faire directement ou par l'intermédiaire d'une gravure intermédiaire d'un masque dur. Le procédé peut être le suivant :
- dépôt d'un matériau absorbant, par exemple du tungstène, de hauteur H' ou supérieure à H', sur la surface d'une membrane fine de silicium maintenue tendue par un cadre périphérique,
- dépôt d'une résine sensible au faisceau d'électrons sur le matériau absorbant ;
- écriture du motif dans la résine par un faisceau d'électrons et développement chimique de la résine ;
- transfert du motif de résine subsistant dans la couche absorbante, par gravure anisotrope verticale de la couche absorbante avec un produit qui attaque plus vite le matériau absorbant que la résine développée.

Un transfert par l'intermédiaire d'une couche de masque dur (en carbone par exemple) peut également être envisagé : dans ce cas une couche de masque dur est déposée sur la couche absorbante avant dépôt de la résine, et le motif de résine développée sert à graver le masque dur et non la couche absorbante, avec un produit de gravure qui attaque le masque dur plus vite que la résine développée ; puis, c'est ce masque dur qui sert à protéger la couche absorbante là où elle ne doit pas être enlevée ; le matériau absorbant est alors attaqué avec un produit de gravure qui attaque le matériau absorbant plus vite que le masque dur.

Au lieu de graver les deux mires successivement avec un faisceau d'électrons, on peut aussi utiliser une première mire supérieure lithographiée par faisceau d'électrons, puis mettre en place une deuxième mire au-dessous de la première, et lithographier la deuxième mire par un procédé de lithographie à rayons X ayant la même divergence que le faisceau de l'appareil auquel est destinée la mire. En effet, la première mire peut servir de masque de lithographie puisqu'elle est formée d'un motif de matériau absorbant les rayons X. La deuxième mire sera donc revêtue non pas d'une résine sensible à un faisceau d'électrons mais d'une résine sensible aux rayons X. L'homothétie dans le rapport (D+d)/D de la deuxième mire par rapport à la première mire sera obtenue tout naturellement dès lors que la source de rayons X sera placée à la distance D de la première mire. Là encore, la gravure peut se faire directement avec transfert du motif de résine dans la couche absorbante de la mire inférieure ou indirectement par transfert du motif de résine dans une couche de masque dur puis transfert du motif de la couche de masque dur dans la couche absorbante.

Pour obtenir une mire telle que celle de la figure 5, on procède par lithographie à faisceau d'électrons sur une membrane plane comme expliqué ci-dessus à propos des mires partielles, et on courbe ultérieurement la membrane pour lui donner une forme sphérique, par pression différentielle entre les deux faces, ou par contrainte périphérique.

Pour obtenir des motifs dont la surface est approximativement conique dans le cas des mires telles que celles des figures 2, 3, 4, à partir de zones absorbantes formées sur une surface de membrane plane qui n'est pas destinée à être courbée ultérieurement, on peut lithographier des zones absorbantes en forme d'échelettes, c'est-à-dire des zones de hauteur non uniforme sur l'ensemble de la largeur L de la zone.

On procède encore par lithographie à faisceau d'électrons utilisant une résine sensible aux électrons et un transfert du motif de résine dans la couche absorbante, en exposant la résine sur des bandes très étroites et sur des hauteurs non uniformes : on forme des zones de résine de largeur cumulée L par juxtaposition de plusieurs zones de largeur inférieure Lₘ = L/m, ces zones ayant des hauteurs différentes liées à l'oblicité désirée par rapport au plan de la membrane. Les faisceaux électroniques peuvent écrire dans la résine des zones de largeur de l'ordre de 10 nanomètres, voire moins avec des faisceaux d'électrons fortement accélérés, par exemple au-dessus de 50 kilovolts. La hauteur de la résine dans une bande étroite correspondant à la largeur du faisceau électronique est réglée par la durée d'exposition au faisceau. Si la résolution désirée est une largeur L de l'ordre de 50 nanomètres, on peut former des zones de résine de largeur L par juxtaposition de 3 à 5 motifs de largeur Lₘ égale à 10 à 20 nanomètres.

La figure 10 explique ce principe en montrant trois motifs de résine différents correspondant à trois oblicités différentes souhaitées, de l'ordre de quelques degrés. Sur la figure 10A, la forme de surface approximativement conique est obtenue avec un développement des zones de résine sur quatre bandes juxtaposées dont deux ont une hauteur maximale et les deux autres ont des hauteurs étagées en escalier. La hauteur des marches d'escalier est choisie pour éliminer le mieux possible l'ombrage qui existerait si la hauteur de la résine était uniforme sur les quatre bandes. Sur la figure 10B, où l'oblicité souhaitée est moindre, une seule bande est exposée avec une hauteur plus faible que les autres, et, là encore, l'absence d'ombrage qui en résulte est adaptée à l'oblicité des rayons X qui viendront frapper cette zone lors de l'utilisation de la mire. Enfin, la figure 10C représente un motif de résine d'élévation perpendiculaire à la surface, pour une zone absorbante centrale de la mire ; un tel motif ne nécessite pas des hauteurs étagées des différentes bandes de largeur L/M.

Dans ces configurations, la conicité de la forme des zones absorbantes est la conicité du bord latéral extérieur des zones, c'est-à-dire le bord le plus éloigné du centre de la mire, car c'est ce bord extérieur et non le bord intérieur qui produit un ombrage indésirable de l'espace entre deux zones. Ce qu'on entend alors par "direction générale d'élévation" d'une zone absorbante par rapport à la surface du substrat est alors la direction oblique de ce bord extérieur de la zone.

Le motif étagé de résine en bandes étroites juxtaposées est transféré dans la couche absorbante par gravure plasma anisotrope pour établir un motif de zones absorbantes de hauteurs étagées en correspondance avec le motif de résine de hauteurs étagées. L'étagement de hauteurs peut en effet être conservé dans le processus de transfert, que ce soit un transfert direct du motif de résine dans la couche absorbante ou un transfert indirect par l'intermédiaire d'une couche de masque dur.

Dans la réalisation pratique, les gravures n'étant pas parfaitement anisotropes, un lissage de la forme étagée se produira naturellement lors des transferts direct ou indirect du motif de résine, aboutissant aux formes de surface coniques des zones absorbantes représentées sur la figure 11, dans lesquelles on voit qu'il n'y a pas ou presque pas d'ombrage nuisible au contraste.

Les matériaux absorbants préférés selon l'invention sont le tungstène, le tantale, le nitrure de tantale. Selon le mode de gravure utilisé, d'autres matériaux peuvent être utilisés : l'or et le platine peuvent être gravés par gravure ionique, et dans ce cas on peut graver directement les zones en leur donnant une oblicité contrôlée par l'inclinaison du faisceau de bombardement ionique, mais le rapport hauteur/largeur de la zone est alors plus faible (de l'ordre de 1) que dans le cas du tungstène gravé par gravure anisotrope plasma ; c'est pourquoi, dans le cas de l'or et du platine, il est préférable d'adopter une configuration à deux mires partielles ou plus, telle que celle des figures 7 et 8 même si les zones absorbantes de chaque mire ont aussi une oblicité individuelle (non représentée) sur leur hauteur réduite H'.

On peut également envisager une combinaison de gravure ionique et de gravure plasma, pour bénéficier en partie de l'avantage de la gravure ionique oblique réglable.

## Revendications

1. Procédé de mesure de la résolution spatiale d'un système d'imagerie à rayons X, qui comprend au moins les étapes suivantes :
• détection d'une image, dans ledit système d'imagerie à rayons X, d'une mire de résolution, ladite mire comprenant un substrat portant des zones absorbantes pour les rayons X, dont les largeurs et les espacements sont choisis pour permettre une mesure de la résolution du système,
• mesure du contraste de ladite image,
le procédé est **caractérisé en ce que**
les zones absorbantes de la mire de résolution dans les divers points d'un motif ont une forme dont une direction générale d'élévation par rapport à la surface du substrat est tournée vers un point de convergence (O) qui est le même pour toutes les zones absorbantes.

2. Procédé de mesure de la résolution spatiale d'un système d'imagerie à rayons X selon la revendication 1, dans lequel lesdites zones absorbantes ont chacune une surface en forme de cône ou de portion de cône, dont le sommet est le point de convergence.

3. Procédé de mesure de la résolution spatiale d'un système d'imagerie à rayons X selon l'une des revendications 1 à 2, dans lequel la hauteur (H) de la zone dans la direction de l'élévation par rapport à la surface du substrat est au moins deux fois supérieure et de préférence de deux à cinq fois supérieure à la largeur (L) de la zone.

4. Procédé de mesure de la résolution spatiale d'un système d'imagerie à rayons X selon l'une des revendications 2 à 3, dans lequel ladite mire de résolution comporte une série de plusieurs zones absorbantes coniques d'angles au sommet différents.

5. Procédé de mesure de la résolution spatiale d'un système d'imagerie à rayons X selon la revendication 4, dans lequel lesdites zones absorbantes de forme conique de ladite mire sont espacées les unes des autres d'une même valeur angulaire d'espacement.

6. Procédé de mesure de la résolution spatiale d'un système d'imagerie à rayons X selon la revendication 5, dans lequel ladite mire de résolution comporte plusieurs séries de zones absorbantes coniques dont les angles au sommet diffèrent les uns des autres et qui sont espacées radialement les unes des autres d'une valeur angulaire d'espacement différente pour les différentes séries.

7. Procédé de mesure de la résolution spatiale d'un système d'imagerie à rayons X selon la revendication 1, dans le quel la surface de ladite mire de résolution est sphérique (MB) et les zones absorbantes ont en tout point une direction d'élévation perpendiculaire à la surface.

8. Procédé de mesure de la résolution spatiale d'un système d'imagerie à rayons X selon l'une des revendications 1 à 7, dans lequel ladite mire de résolution comporte au moins deux mires partielles (MB1, MB2) placées l'une derrière l'autre, comportant chacune des zones absorbantes, les motifs de zones absorbantes des deux mires étant semblables et disposés selon une homothétie de telle manière que les positions de deux zones absorbantes qui se correspondent dans les deux mires soient alignées selon une direction caractéristique, toutes les directions caractéristiques d'alignement convergeant vers le point de convergence.

9. Procédé de mesure de la résolution spatiale d'un système d'imagerie à rayons X selon la revendication 8, dans lequel lesdits motifs de zones absorbante sont des lignes parallèles d'espacement constant, droites ou circulaires.

## Patentansprüche

1. Verfahren zur Messung des räumlichen Auflösungsvermögens eines Röntgenstrahlen-Bildgebungssystems, das mindestens die folgenden Schritte umfasst:
• Erfassung eines Bilds eines Auflösungstestbilds in dem Röntgenstrahlen-Bildgebungssystem, wobei das Testbild ein Substrat umfasst, das Absorptionszonen für die Röntgenstrahlen trägt, deren Breiten und Abstände gewählt werden, um eine Messung der Systemauflösung zu erlauben,
• Kontrastmessung des Bilds,
wobei das Verfahren **dadurch gekennzeichnet ist, dass** die Absorptionszonen des Auflösungstestbilds in den verschiedenen Punkten eines Musters eine Form haben, von der eine allgemeine Höhenrichtung bezüglich der Substratoberfläche auf einen Konvergenzpunkt (O) ausgerichtet ist, der für alle Absorptionszonen gleich ist.

2. Verfahren zur Messung des räumlichen Auflösungsvermögens eines Röntgenstrahlen-Bildgebungssystems nach Anspruch 1, in dem die Absorptionszonen jeweils eine Oberfläche in Kegel- oder Kegelabschnittsform haben, wobei der Scheitel der Konvergenzpunkt ist.

3. Verfahren zur Messung des räumlichen Auflösungsvermögens eines Röntgenstrahlen-Bildgebungssystems nach einem der Ansprüche 1 bis 2, wobei die Höhe (H) der Zone in der Höhenrichtung bezüglich der Substratoberfläche mindestens zweimal so hoch und vorzugsweise zwei- bis fünfmal so hoch wie die Breite (L) der Zone ist.

4. Verfahren zur Messung des räumlichen Auflösungsvermögens eines Röntgenstrahlen-Bildgebungssystems nach einem der Ansprüche 2 bis 3, in dem das Auflösungstestbild eine Reihe von mehreren kegelförmigen Absorptionszonen von Winkeln mit unterschiedlichen Scheiteln aufweist.

5. Verfahren zur Messung des räumlichen Auflösungsvermögens eines Röntgenstrahlen-Bildgebungssystems nach Anspruch 4, wobei die kegelförmigen Absorptionszonen des Testbilds um den gleichen Winkelabstandswert voneinander getrennt sind.

6. Verfahren zur Messung des räumlichen Auflösungsvermögens eines Röntgenstrahlen-Bildgebungssystems nach Anspruch 5, in dem das Auflösungstestbild mehrere Reihen von kegelförmigen Absorptionszonen aufweist, deren Winkel sich am Scheitel voreinander unterscheiden und die radial voneinander um einen unterschiedlichen Winkelabstandswert für die unterschiedlichen Reihen getrennt sind.

7. Verfahren zur Messung des räumlichen Auflösungsvermögens eines Röntgenstrahlen-Bildgebungssystems nach Anspruch 1, in dem die Oberfläche des Auflösungstestbilds kugelförmig (MB) ist und die Absorptionszonen in jedem Punkt eine Höhenrichtung senkrecht zu der Oberfläche haben.

8. Verfahren zur Messung des räumlichen Auflösungsvermögens eines Röntgenstrahlen-Bildgebungssystems nach einem der Ansprüche 1 bis 7, in dem das Auflösungstestbild mindestens zwei hintereinander angeordnete Teiltestbilder (MB1, MB2) aufweist, wobei jedes Absorptionszonen aufweist, wobei die Muster der Absorptionszonen der zwei Testbilder ähnlich sind und gemäß einer Ähnlichkeitsabbildung derart angeordnet sind, dass die Positionen der zwei Absorptionszonen, die sich in den zwei Testbildern entsprechen, gemäß einer charakteristischen Richtung ausgerichtet sind, wobei alle charakteristischen Richtungen der Ausrichtung zu dem Konvergenzpunkt zusammenlaufen.

9. Verfahren zur Messung des räumlichen Auflösungsvermögens eines Röntgenstrahlen-Bildgebungssystems nach Anspruch 8, in dem die Muster der Absorptionszonen gerade oder kreisförmige parallele Linien konstanten Abstands sind.

## Claims

1. Method for measuring the spatial resolution of an X-ray imaging system which comprises at least the following steps:
• detecting an image, in said X-ray system, of a resolution test chart, said test chart comprising a substrate bearing X-ray absorbent zones, whose widths and spacings are selected to allow for the measurement of the resolution of the system,
• measuring the contrast of said image,
the method is **characterised in that** the absorbent zones of the resolution test chart in the diverse points of a pattern have a form of which a general direction of elevation relative to the substrate surface is turned towards a point of convergence (O) which is the same for all the absorbent zones.

2. Method for measuring the spatial resolution of an X-ray imaging system according to claim 1, in which said absorbent zones each have a surface in the form of a cone or a portion of a cone, whose vertex is the point of convergence.

3. Method for measuring the spatial resolution of an X-ray imaging system according to one of claims 1 to 2, in which the height (H) of the zone in the direction of elevation relative to the substrate surface is at least two times greater and preferably two to five times greater than the width (L) of the zone.

4. Method for measuring the spatial resolution of an X-ray imaging system according to one of claims 2 to 3, in which said resolution test chart comprises a series of several conical absorbent zones of different vertex angles.

5. Method for measuring the spatial resolution of an X-ray imaging system according to claim 4, in which said conical-shaped absorbent zones of said test chart are spaced from each other by a same angular spacing value.

6. Method for measuring the spatial resolution of an X-ray imaging system according to claim 5, in which said resolution test chart comprises several series of conical absorbent zones whose angles differ from each other at the vertices and which are spaced from each other radially by a different angular spacing value for the different series.

7. Method for measuring the spatial resolution of an X-ray imaging system according to claim 1, in which the surface of said resolution test chart is spherical (MB) and the absorbent zones have at any point a direction of elevation perpendicular to the surface.

8. Method for measuring the spatial resolution of an X-ray imaging system according to one of claims 1 to 7, in which said resolution test chart comprises at least two partial test charts (MB1, MB2) placed one behind the other, each comprising absorbent zones, the absorbent zone patterns of the two test charts being similar and disposed according to a homothety in such a way the positions of two absorbent zones which correspond in the two test charts are aligned along a characteristic direction, all characteristic directions of alignment converging towards the point of convergence.

9. Method for measuring the spatial resolution of an X-ray imaging system according to claim 8, in which said absorbent zone patterns are straight or circular parallel lines of constant spacing.
